Europäisches Patentamt

European Patent Office

Office européen des brevets

(19)

(11) Veröffentlichungsnummer: **0 107 021**
**B1**

# (12) EUROPÄISCHE PATENTSCHRIFT

(45) Veröffentlichungstag der Patentschrift:
20.05.87

(51) Int. Cl.⁴: **G 01 P 5/00**

(21) Anmeldenummer: 83109161.6

(22) Anmeldetag: 16.09.83

(54) **Fiberoptisches Doppler-Anemometer.**

(30) Priorität: 24.09.82 DE 3235369

(43) Veröffentlichungstag der Anmeldung:
02.05.84 Patentblatt 84/18

(45) Bekanntmachung des Hinweises auf die Patenterteilung:
20.05.87 Patentblatt 87/21

(84) Benannte Vertragsstaaten:
AT BE CH DE FR GB IT LI NL SE

(56) Entgegenhaltungen:
FR-A-2 446 482
GB-A-2 076 960
US-A-3 575 129
US-A-3 896 305
US-A-4 084 130

APPLIED OPTICS, Band 14, Nr. 1, Januar 1975,
Seiten 189-196, New York, USA; T. TANAKA et al.:
"Measurement of the velocity of blood flow (in
vivo) using a fiber optic catheter and optical mixing
spectroscopy"
APPLIED OPTICS, Band 21, Nr. 10, Mai 1982, Seiten
1785-1790, New York, USA; H. NISHIHARA et al.:
"Optical-fiber laser Doppler velocimeter for highresolution measurement of pulsatile blood flows"
JOURNAL OF PHYSICS E-SCIENTIFIC
INSTRUMENTS, Band 14, Nr. 6, Juni 1981, Seiten 747-
751, Dorking, GB.A. MEN et al.: "A new method of

(73) Patentinhaber: BASF Aktiengesellschaft, Carl-
Bosch- Strasse 38, D-6700 Ludwigshafen (DE)

(72) Erfinder: Auweter, Helmut, Dr., Franz- von-
Sickingen- Strasse 9, D-6700 Ludwigshafen (DE)
Erfinder: Horn, Dieter, Dr., Schroederstrasse 69,
D-6900 Heidelberg (DE)
Erfinder: Lueddecke, Erik, Dr., Thomas- Mann-
Strasse 27, D-6704 Mutterstadt (DE)

(56) Entgegenhaltungen: (Fortsetzung)
simultaneous particle sizing and two-component
velocity measurement"

EP 0 107 021 B1

**Beschreibung**

Die vorliegende Erfindung betrifft ein fiberoptisches Doppler-Anemometer nach dem Oberbegriff des Anspruchs 1 (siehe Applied Optics 21 (15. Mai 1982), Seiten 1785 bis 1790).

Ein fiberoptisches Doppler-Anemometer kann zu zwei grundsätzlich unterschiedlichen Anwendungszwecken benutzt werden. Zum einen wird das fiberoptische Doppler-Anmemometer in der Velocimetrie eingesetzt. Hier können Strömungsgeschwindigkeiten, Geschwindigkeitsgradienten und Turbulenzen selbst an entlegenen, einem direkten Laserstrahl unzugänglichen Stellen gemessen werden. Als Beispiele seien nur Strömungen in Metallrohren, in Verbrennungsmotoren und in Blutbahnen genannt.

Zum anderen wird das fiberoptische Doppler-Anemometer in der physikalisch-chemischen Analytik eingesetzt, um Diffusionskoeffizienten und Durchmesser von dispergierten kolloidalen Partikeln mit den Methoden der Photonen-Korrelations-Spektroskopie zu bestimmen. Das fiberoptische Doppler-Anemometer ermöglicht diese Messungen in situ, insbesondere auch an schwer zugänglichen Stellen wie z.B. in Reaktionsgefäßen oder explosionsgefährdeten Räumen. Ferner können mit Hilfe des fiberoptischen Doppler-Anemometers hochkonzentrierte und absorbierende Proben untersucht werden. Diese Eigenschaften lassen das fiberoptische Doppler-Anemometer zum Einsatz bei der Kontrolle und Steuerung von Produktionsvorgängen geeignet erscheinen.

Das Prinzip des fiberoptischen Doppler-Anemometers beruht auf der Dopplerverschiebung von Licht, das an bewegten Partikeln gestreut worden ist. Bei der Anwendung des fiberoptischen Doppler-Anemometers in der Velocimetrie ist die Partikelbewegung durch eine Strömung bedingt. Bei Anwendung des fiberoptischen Doppler-Anemometers zur Bestimmung von Diffusionskoeffizienten und Partikeldurchmessern ist dagegen die Partikelbewegung durch die Brownsche Molekularbewegung bedingt.

Die technische Realisierung eines fiberoptischen Doppler-Anemometers ist bekannt und in der Literatur beschrieben (Applied Optics 14 (1975), 189). Hierbei ist der apparative Aufbau dadurch gekennzeichnet, daß das Laserlicht über einen Strahlteiler zu einer fiberoptischen Tauchsonde gelenkt wird. Das vom streuenden Medium rückgestreute Licht wird vom selben Strahlteiler teilweise zu einem Photodetektor reflektiert. Auf diese Weise gehen mindestens 75 % der zur Verfügung stehenden Lichtintensität verloren.

Eine Reduzierung dieses Intensitätsverlustes wird erreicht, indem anstelle eines Strahlteilers ein vollreflektierender Spiegel verwendet wird, in dessen Mitte ein Loch gebohrt ist (Microwaves, Optics and Acoustics 2 (1978), 13). Durch dieses Loch tritt der Laserstrahl ungeschwächt durch den Spiegel hindurch und wird auf eine fiberoptische Tauchsonde fokussiert. Das vom streuenden Medium rückgestreute Licht wird nach Austritt aus der fiberoptischen Tauchsonde unter dem von der numerischen Apertur des Lichtleiters bestimmten Winkel von der Fokussierungslinse kollimiert und leuchtet eine relativ große Fläche des Spiegels aus. Somit wird ein großer Prozentsatz des Streulichts auf den Photodetektor reflektiert. Je nach Dimensionierung liegen die Verluste nur bei 5 % bis 10 % der Lichtintensität.

Aus dem Aufsatz von H. Nishihara et al. (Applied Optics 21 (1982), 1785) ist es bekannt, daß die heterodyne Detektion auch dadurch realisiert werden kann, daß das Refererzlicht durch einen polarisierenden Strahlteiler vom Laserstrahl abgetrennt werden kann, daß das Referenzlicht durch eine Bragg-Zelle frequenzverschoben werden kann, daß das Referenzlicht anschließend mit dem Doppler-verschobenen Signal gemischt, und daß schließlich eine Avalanche-Photodiode als Photodetektor verwendet werden kann. Außerdem ist bekannt, daß das Ende des Lichtleiters als Katheter ausgestaltet werden kann, daß das Lichtleiterende durch eine hypodermische Nadel in Blutbahnen eingeführt werden kann, daß der Lichtleiter von einem Plastikhalter eingefaßt werden kann, der wiederum so gestaltet ist, daß eine Flüssigkeit, z.B. Heparin, injiziert werden kann.

Die quantitative Erfassung der Dopplerverschiebung des gestreuten Lichts erfolgt beim fiberoptischen Doppler-Anemometer durch heterodyne Detektion, da auf dem Photodetektor eine Überlagerung von gestreutem, dopplerverschobenem Licht mit nichtverschobenem Laserlicht registriert wird. Das nichtverschobene Laserlicht rührt von Reflexionen an den Enden der fiberoptischen Tauchsonde sowie von Rayleigh-Streulicht an den Molekülen des Lichtleiters her. Die elektronische Aufzeichnung des heterodynen Fluktuationssignals erfolgt wahlweise mit den Methoden der Frequenz- oder Autokorrelationsanalyse. Aus dem Verlauf der gemessenen Frequenzverteilung bzw. Autokorrelationsfunktion können die Strömungsgeschwindigkeiten bzw. die Diffusionskoeffizienten ermittelt werden. Für monodisperse, kugelförmige und nicht wechselwirkende Partikel ist z.B. der Zusammenhang zwischen der Abklingkonstanten der Autokorrelationsfunktion, $\Gamma$ (die identisch ist mit der Halbwertsbreite der lorentzförmigen Frequenzverteilung), und dem Diffusionskoeffizienten D gegeben durch

$\Gamma = DK^2$,

wobei K der Streuvektor ist.

Bei der Auswertung der Messergebnisse ist zu beachten, daß beim fiberoptischen Doppler-Aneßometer eine 180°-Streugeometrie vorliegt. Das bedeutet, daß für polydisperse Proben ein mittlerer Diffusionskoeffizient der Form

$$\bar{D}_{180°} = \frac{\sum_i N_i M_i^2 P(180°, M_i) D_i}{\sum_i N_i M_i^2 P(180°, M_i)}$$

gemessen wird wobei $N_i$ die Anzahl $M_i$ die Masse $D_i$ der Diffusionskoeffizient und P (180°, $M_i$) die Streufunktion der Partikeln der i-ten Komponente der polydispersen Verteilung ist. Daraus läßt sich über die Stokes-Einstein-Beziehung

$$\bar{d}_{180°} = \frac{kT}{3\pi \eta \ D_{180°}}$$

der zugehörige hydrodynamische, kugeläquivalente Partikeldurchmesser $d180°$ berechnen. Dabei ist k die Boltzmann-Konstante, T die Temperatur und $\eta$ die Viskosität des Lösungsmittels.

Die bisherigen Realisierungen des fiberoptischen Doppler-Anemometers sind mit Hilfe von diskreten optischen Bauelementen aufgebaut und dadurch gekennzeichnet, daß neben einem Strahlteiler oder Lochspiegel eine Reihe weiterer optischer Komponenten, wie z.B. Polarisatoren, Linsen, Irisblenden, Präzisionshalterungen für den Laser und den Lichtleiter sowie Bragg-Zellen erforderlich sind. Vom gesamten optischen Aufbau ist aufgrund der heterodynen Detektionsweise eine Stabilität von interferometrischer Qualität erforderlich. Kosten und Platzbedarf einer solchen Anordnung sind beträchtlich. Diese Faktoren führen dazu, daß die bisherigen technischen Realisierungen des fiberoptischen Doppler-Anemometers nur für den Laboreinsatz geeignet sind.

Der Erfindung liegt die Aufgabe zugrunde, den Aufbau eines fiberoptischen Doppler-Anemometers wesentlich zu vereinfachen und gleichzeitig die Flexibilität des Anemometers zu erhöhen, um damit den Kreis der Einsatzmöglichkeiten zu erweitern.

Diese Aufgabe wird durch eine Ausgestaltung nach dem Anspruch 1 gelöst.

Besondere Ausführungsarten sind den Ansprüchen 2 bis 5 und Anwendungen den Ansprüchen 6 bis 8 zu entnehmen.

Die Anwendung des erfindungsgemäßen fiberoptischen Doppler-Anemometers ermöglicht, daß Strömungsgeschwindigkeiten von fluiden und gasförmigen Medien, insbesondere auch in Blutbahnen, gemessen werden; daß Diffusionskoeffizienten und Partikeldurchmesser von kolloid-dispersen Systemen gemessen werden; daß Partikel bekannter Größe dem zu untersuchenden Medium zugesetzt werden und daß aus dem gemessenen Diffusionskoeffizienten die Viskosität des Mediums berechnet wird. Die mit der Erfindung erzielten Vorteile bestehen insbesondere darin, daß statt eines diskreten apparativen Aufbaus aus einzelnen, präzise gehalterten optischen Komponenten, ein teilweise oder vollständig aus fiberoptischen Komponenten bestehendes Anemometer realisiert wird, so daß der Weg des Laserlichts und des gestreuten Lichts großteils oder ganz durch Lichtleiter und fiberoptische Komponenten führt. Dadurch entfallen alle diskreten optischen Komponenten und es entfällt die Forderung nach interferometricher Stabilität des Aufbaus.

Die Anordnung kann überall betrieben werden, da ein Aufbau auf einer optischen Tischplatte nicht mehr notwendig ist. Die fiberoptischen Komponenten werden lediglich durch entsprechende Steckverbindungen miteinander verbunden. Außerdem kann die Messung an unzugänglichen Stellen vorgenommen werden, da die fiberoptische Tauchsonde flexibel ist und von beträchtlicher Länge sein kann.

Durch Verwendung von in der Nachrichtentechnik gebräuchlichen fiberoptischen Komponenten wird die Handhabung des fiberoptischen Doppler-Anemometers sehr einfach. Damit eröffnen sich viele neue Anwendungsmöglichkeiten in der Velocimetrie und bei der Messung von Diffusionskoeffizienten in der Forschung und in der Praxis.

Zwei Ausführungsbeispiele der Erfindung sind im folgenden dargestellt und werden näher beschrieben. Es zeigen

Figur 1 ein fiberoptisches Doppler-Anemometer unter Verwendung eines fiberoptischen Kopplers,

Figur 2 ein fiberoptisches Doppler-Anemometer, vollständig aus fiberoptischen Komponenten bestehend,

Figur 3 den Diffusionskoeffizienten einer Latexdispersion als Funktion der Feststoff-Konzentration,

Figur 4 den kugeläquivalenten hydrodynamischen Partikeldurchmesser von Latexteilchen als Funktion der Feststoff-Konzentration.

Unter Verwendung eines fiberoptischen Kopplers 1 wird ein aus einem Laser 4 austretender Laserstrahl 9 mit Hilfe einer Linse 10 auf den mit einer Endhülse 11 terminierten Lichtleiter 5 fokussiert. Dieser Lichtleiter 5 ist über eine Steckverbindung 12 an den Koppler 1 angeschlossen. Aus dem Koppler 1 tritt das Laserlicht wieder aus und wird über einen Lichtleiter 8 in eine Probe 13 geleitet. Dieser Lichtleiter 8, terminiert mit der Endhülse 7, stellt die fiberoptische Tauchsonde 2 dar. Das Laserlicht tritt am Lichtleiterende unter dem Winkel $\mathcal{L}$ 2 arcsin (NA) aus, wobei NA die numerische Apertur des Lichtleiters ist.

Das von der Probe 13 rückgestreute Licht tritt über die Endhülse 7 wieder in den Lichtleiter 8 ein und gelangt über eine Steckverbindung 14 des Kopplers 1 zu einer Steckverbindung 15. Über einen Lichtleiter 6 wird das fluktuierende Streulicht auf einen Detektor 3 geleitet, wo es zuvor aus einer Endhülse 16 austritt, von einer Linse 17 fokussiert und von einer Lochblende 18 begrenzt wird.

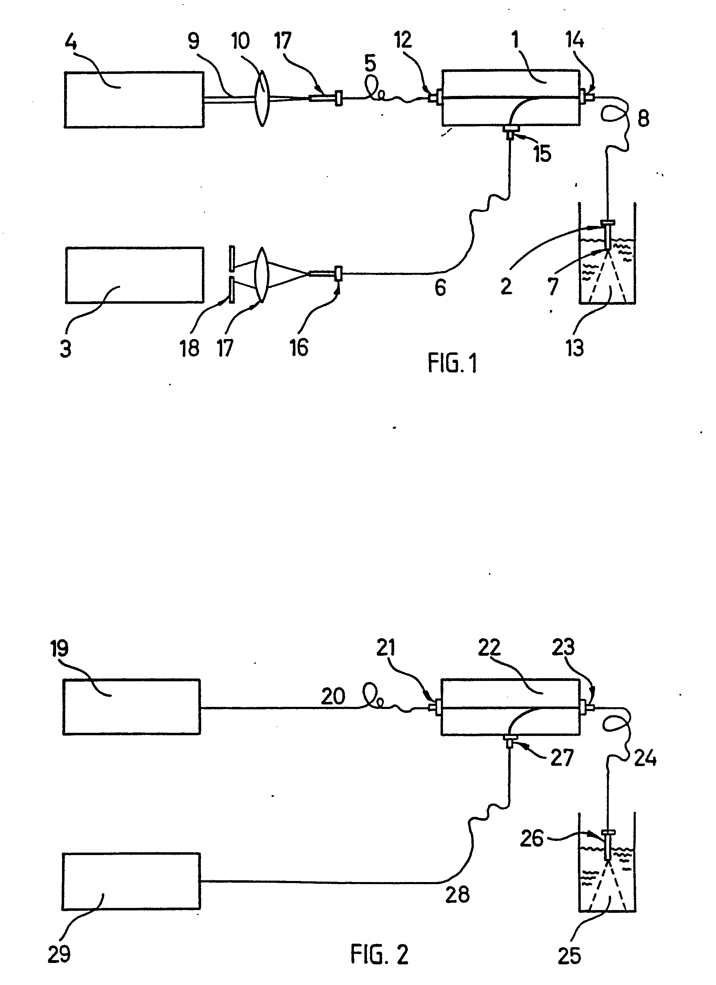

Gemäß der in Figur 2 dargestellten Anordnung gelangt kohärentes Laserlicht direkt von einem Halbleiterlaser 19 über einen Lichtleiter 20 zu einer Steckverbindung 21 eines Kopplers 22. An einer Steckverbindung 23 tritt das Laserlicht wieder aus und gelangt über einen Lichtleiter 24 in eine Probe 25. Das Laserlicht tritt dort aus

**0 107 021**

dem mit einer Endhülse 26 terminierten Lichtleiter 24 aus.

Das von der Probe 25 rückgestreute Licht gelangt über den Lichtleiter 24 und die Steckverbindung 23 zu einer Steckverbindung 27 und von dort direkt über einen Lichtleiter 28 zu einem Photodetektor 29. In dieser Ausführung verläuft der gesamte Lichtweg des gestreuten Lichts in Lichtleitern bzw. in fiberoptischen Komponenten.

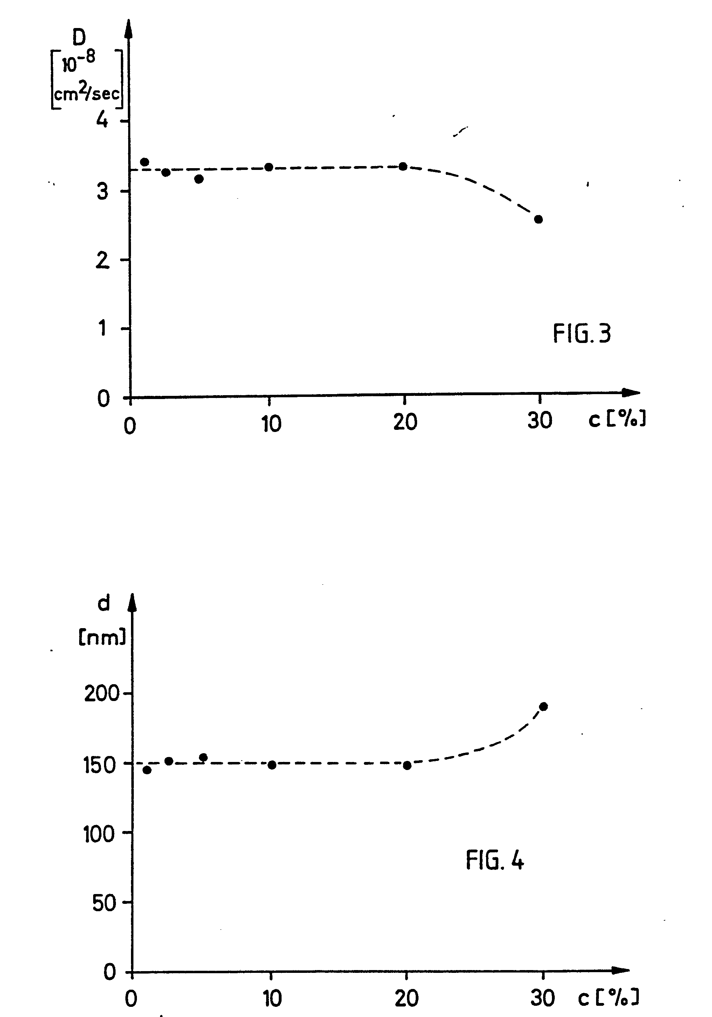

Figur 3 zeigt als typisches Meßergebnis einer Diffusionsmessung den Diffusionskoeffizienten D einer Latexdispersion als Funktion der Feststoff-Konzentration. Bei Konzentrationen größer als 20 % wird der Diffusionskoeffizient kleiner, da die Viskosität der Dispersion zunimmt. Figur 4 zeigt den nach der Stokes-Einstein-Beziehung aus dem Diffusionskoeffizienten berechneten kugeläquivalenten Partikeldurchmesser ebenfalls als Funktion der Feststoff-Konzentration. Bei Konzentrationen größer als 20 % zeigen sich Abweichungen vom tatsächlichen Partikeldurchmesser, da die freie Diffusion der Teilchen aufgrund der hohen Konzentration behindert ist.

## Patentansprüche

1. Fiberoptisches Doppler-Anemometer zur Messung der Dopplerverbreiterung von Laserlicht, das von einem streuenden Medium, beispielsweise Partikeln in Bewegung, gestreut wurde, wobei kohärentes Laserlicht von einem Laser (4, 19) über eine fiberoptische Tauchsonde (8, 2 und 24, 26) in das Medium (13, 25) geleitet wird und das vom Medium (13, 25) rückgestreute Licht durch die fiberoptische Tauchsonde (8, 2 und 24, 26) aufgenommen und zu einem Photodetektor (3, 29) geleitet wird, <u>dadurch gekennzeichnet</u>, daß vor der fiberoptischen Tauchsonde (8, 2 und 24, 26) ein fiberoptischer Koppler (1, 22) angeordnet ist.

2. Anemometer nach Anspruch 1, bei dem der Laser (4, 19) ein Halbleiterlaser ist, und das Laserlicht direkt über einen Lichtleiter (5, 20) zum fiberoptischen Koppler (1, 22) geleitet ist.

3. Anemometer nach Anspruch 1 oder 2, bei dem der Photodetektor (3, 29) eine Silizium-Avalanche-Photodiode ist, und das von dem fiberoptischen Koppler (1, 22) abgezweigte Streulicht direkt über einen Lichtleiter (6, 28) zur Silizium-Avalanche-Photodiode geleitet ist.

4. Anemometer nach einem der Ansprüche 1 bis 3, bei dem der Anemometeraufbau vollständig aus fiberoptischen Komponenten (19, 20, 21, 23, 27, 28, 29) besteht.

5. Anemometer nach einem der Ansprüche 1 bis 4, bei dem die fiberoptische Tauchsonde (2) aus einem mit einer Endhülse (7) terminierten Lichtleiter (8) besteht, der zusätzlich von einem schützenden Rohr umgeben und außerdem an seinem Ende hydrophobisiert ist.

6. Anwendung des Anemometers nach einem der Ansprüche 1 bis 5, zur Messung von Strömungsgeschwindigkeiten von fluiden und gasförmigen Medien (13, 25), insbesondere auch in Blutbahnen.

7. Anwendung des Anemometers nach einem der Ansprüche 1 bis 5, zur Messung von Diffusionskoeffizienten und Partikeldurchmessern von kolloid-dispersen Systemen.

8. Anwendung des Anemometers nach einem der Ansprüche 1 bis 5, wobei Partikel bekannter Größe dem zu untersuchenden Medium (13, 25) zugesetzt werden und aus dem gemessenen Diffusionskoeffizienten die Viskosität des Mediums (13, 25) berechnet wird.

## Claims

1. A fiber-optical Doppler anemometer for measuring the Doppler broadening of laser light scattered by a scattering medium, for example by particles in motion, coherent light from a laser (4, 19) being passed via a submerged fiber-optical probe (8, 2 and 24, 26) into the medium (13, 25), and the light scattered back by the medium (13, 25) being picked up by the submerged fiber-optical probe (8, 2 and 24, 26) and passed to a photodetector (3, 29), wherein a fiber-optical coupler (1, 22) is arranged ahead of the submerged fiber-optical probe (8, 2 and 24, 26).

2. An anemometer as claimed in claim 1, wherein the laser (4, 19) is a semiconductor laser, and the laser light is passed directly via a light guide (5, 20) to the fiber-optical coupler (1, 22).

3. An anemometer as claimed in claim 1 or 2, wherein the photodetector (3, 29) is a silicon avalanche photodiode, and the scattered light branched off from the fiber-optical coupler (1, 22) is passed directly via a light guide (6, 28) to the silicon avalanche photodiode.

4. An anemometer as claimed in any of claims 1 to 3, which is constructed entirely of fiber-optical components (19, 20, 21, 23, 27, 28, 29).

5. An anemometer as claimed in any of claims 1 to 4, wherein the submerged fiber-optical probe (2) consists of a light guide (8) which is terminated by a sleeve (7) and is furthermore surrounded by a protective tube and also rendered hydrophobic at its end.

6. The use of an anemometer as claimed in any of claims 1 to 5 for measuring the flow rates of fluid and gaseous media (13, 25), especially in bloodstreams.

7. The use of an anemometer as claimed in any of claims 1 to 5 for measuring diffusion coefficients and particle diameters of dispersed colloidal systems.

4

8. The use of an anemometer as claimed in any of claims 1 to 5, particles of known size being added to the medium (13, 25) to be examined, and the viscosity the medium (13, 25) being calculated from the measured diffusion coefficient.

## Revendications

1. Anémomètre Doppler à fibres optiques pour la mesure de l'étalement Doppler de lumière laser qui a été dispersée d'un milieu dispersant, par exemple des particules en mouvement, de la lumière laser cohérente d'un laser (4, 19) étant conduite dans le milieu (13, 25) par une sonde plongeuse (8, 2 et 24, 26) à fibres optiques et la lumière redispersée du milieu (13, 25) étant captée par la sonde plongeuse (8, 2, 13, 25) à fibres optiques et conduite à un photodétecteur (3, 25) caractérisé par le fait qu'en amont de la sonde plongeuse (8, 2 et 24, 26) à fibres optiques est disposé un coupleur (1, 22) à fibres optiques.

2. Anémomètre selon la revendication 1, dans lequel le laser (4, 19) est un laser à semi-conducteur et la lumière laser est conduite directement au coupleur à fibree optiques (1, 22) par un conducteur de lumière (5, 20).

3. Anémomètre selon la revendication 1 ou 2, dans lequel le photodetécteur (3, 29) est une photodiode à avalanche au silicium et la lumière dispersée derivée du coupleur (1, 22) à fibres optiques est dirigée directement, par un conducteur de lumière (6, 28) à la photodiode à avalanche au silicium.

4. Anémomètre selon l'une des revendications 1 à 3, dans lequel l'ensemble de l'anémomètre est constitué entièrement de composants à fibres optiques (19, 20, 21, 23, 27, 28, 29).

5. Anémomètre selon l'une des revendications 1 à 4 dans lequel la soude plongeuse (2) à fibres optiques est constituée d'un conducteur de lumière (8) se terminant par une douille d'extrémité (7).

6 Utilisation de l'anémomètre selon l'une des revendications 1 à 5, pour la mesure de vitesses d'écoulement de milieur fluides et gazeux (13, 25) en particulier aussi dans les courants sanguins.

7. Utilisation de l'anémomètre selon l'une des revendications 1 à 5, pour la mesure de coefficients de diffusion et de diamètres de particulee de systèmes à dispersion colloïdale.

8. Utilisation de l'anémomètre selon l'une des revendications 1 à 5, des particules de grosseurs connues étant ajoutés au milieu à étudier (13, 25) et la viscosité du milieu (13, 25) étant calculée à partir des coefficients de diffusion mesurés.

FIG. 1

FIG. 2

FIG. 3

FIG. 4